# EUROPEAN PATENT APPLICATION

(11) **EP 4 624 737 A1**
(43) Date of publication of application: **01.10.2025**
(21) Application number: 25158957.8
(22) Date of filing: 19.02.2025
(51) Int. Cl.: F02D 19/06, F02D 19/08, F02D 19/10, F02D 41/08, F02D 41/16, F02D 41/40, F02D 41/00, F02M 43/00

(54) **ENGINE DEVICE**

(30) Priority: 18.03.2024 JP 2024042195
(71) Applicant: Yanmar Holdings Co., Ltd., Osaka-shi, Osaka (JP)
(72) Inventor: TOSHINAGA, Kazuteru, Osaka (JP); MATSUNAGA, Daichi, Osaka (JP); ASAI, Go, Osaka (JP)
(74) Representative: Novagraaf International SA

(57) **Abstract**

[Problem] To provide an engine device that includes an engine capable of performing idle operation and low load operation with a main fuel including a low GHG fuel, which emits less greenhouse gas, while suppressing an increase in product costs.

[Solution] The engine device 1 including a multi-fuel engine 2 that is operated by burning a main fuel including a low GHG fuel, which emits less greenhouse gas than a petroleum-based fuel, and a hydrocarbon-based auxiliary fuel includes a main fuel injection unit 7a of a fuel injection unit 7, which injects the main fuel by electric control, an auxiliary fuel injection unit 7b of the fuel injection unit 7, which injects the auxiliary fuel by mechanical control, and a control device 8 that electrically controls at least one of the injection volume, injection pressure, injection timing, and injection frequency of the main fuel by the main fuel injection unit 7a. The control device 8 controls the rotation speed of the multi-fuel engine 2 at the time of idle operation.

## Description

### TECHNICAL FIELD

The present invention relates to an engine device including a multi-fuel engine that is operated by burning a main fuel including a low GHG fuel, which emits less greenhouse gas than a petroleum-based fuel, and a hydrocarbon-based auxiliary fuel.

### BACKGROUND ART

Conventionally, there is an engine device that supplies various kinds of fuels to an engine corresponding to a wide variety of fuels, that is, a multi-fuel engine. In order for the multi-fuel engine to handle a main fuel including a low greenhouse gas (GHG) fuel, such as ammonia or alcohol, which emits less greenhouse gas than a petroleum-based fuel, the engine needs to burn even a main fuel having poor ignitability. In order to burn such a flame-retardant main fuel, the engine device supplies, in addition to the main fuel, a hydrocarbon-based auxiliary fuel such as light oil, kerosene, or heavy oil having good ignitability to the multi-fuel engine, and thus can burn the main fuel together with the auxiliary fuel.

For example, Patent Document 1 discloses a fuel injection device that injects fuel into a cylinder of an internal combustion engine. The fuel injection device includes a main fuel system that injects the fuel, and an auxiliary fuel system that injects the fuel under pressure higher than injection pressure of the main fuel system in an initial stage of a fuel injection period. Alternatively, the fuel injection device includes a main fuel system that injects fuel and an auxiliary fuel system that injects the fuel under pressure higher than injection pressure of the main fuel system when injecting the fuel simultaneously with the main fuel system.

According to Patent Document 1, the fuel injection device includes pressure detection means that detects pressure in the cylinder of the internal combustion engine, and control means that changes an injection condition of an auxiliary fuel based on the pressure detected by the pressure detection means. Alternatively, the fuel injection device includes control means that changes an injection condition of the auxiliary fuel system in accordance with a load condition of the internal combustion engine, and performs injection of the auxiliary fuel system at the time of low load operation of the internal combustion engine. According to Patent Document 1, the auxiliary fuel system includes a pressure accumulator that accumulates pressurized fuel, the internal combustion engine is a diesel engine, and the pressure accumulator includes a common rail.

In addition, Patent Document 2 discloses a fuel injection device that injects fuel into a cylinder of an internal combustion engine. The fuel injection device includes main fuel injection means that injects a main fuel, auxiliary fuel injection means that injects an auxiliary fuel, and control means that allows the auxiliary fuel to be injected before injection of the main fuel and controls the auxiliary fuel injection means based on a change in initial combustion of the injection of the auxiliary fuel.

According to Patent Document 2, the internal combustion engine is a diesel engine, the main fuel injection means injects the main fuel by mechanical control, and the auxiliary fuel injection means includes an accumulator including a common rail that accumulates pressurized fuel, and injects the auxiliary fuel by electrical control.

### PRIOR ART DOCUMENT

### PATENT DOCUMENT

Patent Document 1: Japanese Unexamined Patent Publication No. 2010-133391
Patent Document 2: Japanese Unexamined Patent Publication No. 2013 - 036462

### SUMMARY OF INVENTION

### TECHNICAL PROBLEM

In the related art as disclosed in Patent Document 1 and Patent Document 2, a mechanically controlled injection device or a common rail system is applied as means that supplies a main fuel such as ammonia or alcohol to an engine, and a common rail system is applied as means that supplies an auxiliary fuel such as light oil, kerosene, or heavy oil to the engine. However, when the common rail systems are applied to both supply means for the main fuel and supply means for the auxiliary fuel, the product cost increases.

Also, in the related art as described in Patent Document 1 and Patent Document 2, the common rail system is applied to the supply means for the auxiliary fuel; therefore, the mechanically controlled injection device is applied to the supply means for the main fuel in order to suppress an increase in production cost. However, as compared with the common rail system, the mechanically controlled injection device has limitation in a small amount of injection compared with the common rail system, injection pressure at the time of the small amount of injection is low, and has low flexibility in changing the injection timing. As a result, when the main fuel is supplied to the engine by the mechanically controlled injection device, rotational stability is lowered at the time of idle operation of the engine, and thus the idling speed cannot be lowered. For the same reason, when the main fuel is supplied to the engine by the mechanically controlled injection device, rotational stability may be lowered at the time of low load operation of the engine.

In order to solve such problems, in the conventional engine device, at the time of idle operation or low load operation of the engine, the common rail system is applied and the engine is operated with the auxiliary fuel. However, in this case, the use of ammonia or alcohol, which is a low GHG fuel, is limited, and a decrease in greenhouse gas emissions cannot be promoted.

Additionally, the injection pressure of the mechanically controlled injection device is generally low compared with the common rail system, and the injection device has low flexibility in changing the injection pressure or injection timing and multiple injection. Accordingly, when the mechanically controlled injection device is applied to the supply means for the main fuel, the ignitability and combustion speed of which are low, it is difficult to improve combustibility such as atomization of the main fuel and enhancement of penetration, and the use limit of the main fuel (for example, the used amount, a mixed combustion ratio at the time of mixed combustion, or the like) may be limited to be lower.

The present invention is intended to provide an engine device that includes an engine capable of performing idle operation and low load operation with a main fuel including a low GHG fuel, which emits less greenhouse gas, while suppressing an increase in product costs.

### SOLUTION TO PROBLEM

In order to the problems above, an engine device of the present invention is operated by burning a main fuel including a low GHG fuel, which emits less greenhouse gas than a petroleum-based fuel, and a hydrocarbon-based auxiliary fuel, the engine device including: a main fuel injection unit that injects the main fuel by electric control; an auxiliary fuel injection unit that injects the auxiliary fuel by mechanical control; and a control device that electrically controls at least one of injection volume, injection pressure, injection timing, and injection frequency of the main fuel by the main fuel injection unit. The control device controls a rotation speed of an engine at the time of idle operation.

### ADVANTAGEOUS EFFECTS OF INVENTION

According to the present invention, an engine device including an engine is provided, the engine being capable of performing idle operation and low load operation with a main fuel including a low GHG fuel, which emits less greenhouse gas, while suppressing an increase in product cost.

### BRIEF DESCRIPTION OF DRAWINGS

FIG. 1 is a schematic view illustrating an engine device according to an embodiment of the present invention.
FIG. 2 is a schematic view illustrating the engine device according to another embodiment of the present invention.

### DESCRIPTION OF EMBODIMENTS

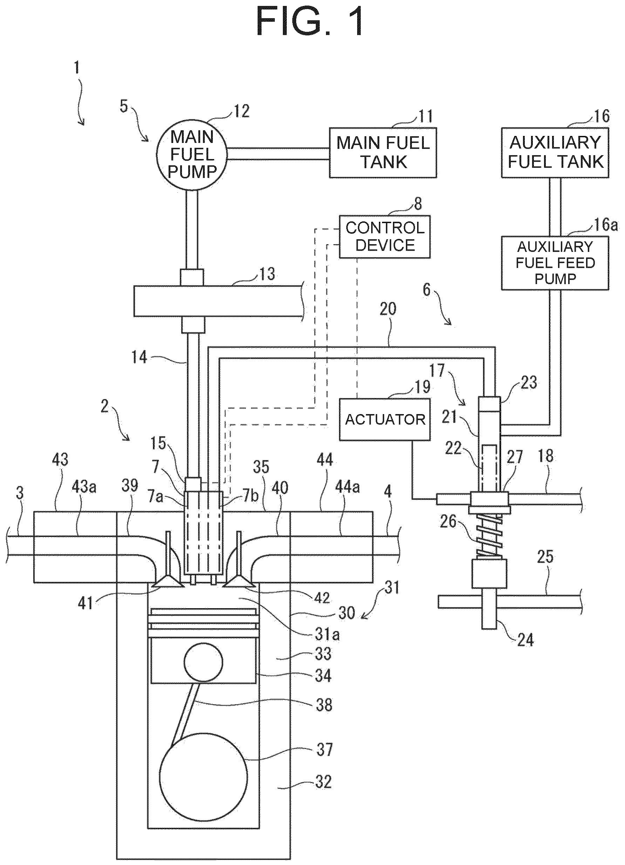

An engine device 1 according to an embodiment of the present invention will be described with reference to the drawings. As illustrated in FIG. 1, the engine device 1 includes a multi-fuel engine 2, an intake passage 3, an exhaust passage 4, a main fuel supply device 5, an auxiliary fuel supply device 6, a fuel injection unit 7, and a control device 8.

In the present embodiment, in particular, the multi-fuel engine 2 is configured to operate by burning at least one of a main fuel including low greenhouse gas (GHG) fuel such as ammonia or alcohol (for example, ethanol, butanol, and methanol), which emits less greenhouse gas than a petroleum-based fuel, and an auxiliary fuel being a hydrocarbon-based fuel such as light oil, kerosene, and heavy oil in a combustion chamber 31a of each cylinder 31 formed of a cylinder 33 and a piston 34. In the engine device 1, a fuel-air mixture of the main fuel and air is supplied to the combustion chamber 31a of each cylinder 31 of the multi-fuel engine 2. In the engine device 1, the supply of the main fuel and the supply of the auxiliary fuel are controlled by the control device 8.

The main fuel supply device 5 includes a common rail system provided with a main fuel tank 11, a main fuel pump 12, a common rail 13, a main fuel supply passage 14, and a main fuel supply valve 15. The multi-fuel engine 2 includes a plurality of cylinders 31; however, in FIG. 1, the main fuel supply passage 14 and the main fuel supply valve 15 to one of the cylinders 31 is illustrated and the main fuel supply passages 14 and the main fuel supply valves 15 to the others of the cylinders 31 are not illustrated.

The main fuel tank 11 is a tank in which the main fuel that is a low GHG fuel such as ammonia or alcohol, which emits less greenhouse gas, is filled from the outside and stored. The main fuel tank 11 is connected via the main fuel pump 12 to the common rail 13. The main fuel pump 12 pressurizes the main fuel stored in the main fuel tank 11 and supplies the pressurized main fuel to the common rail 13.

The common rail 13 is a main fuel accumulator that accumulates the main fuel pressurized by the main fuel pump 12, is disposed in common to the plurality of cylinders 31 of the multi-fuel engine 2, and is connected to the fuel injection unit 7 of each of the cylinders 31 via the main fuel supply passage 14 disposed for each cylinder 31. Each main fuel supply passage 14 is provided with the main fuel supply valve 15 that opens and closes the supply of the main fuel from the common rail 13 to the fuel injection unit 7. Opening and closing of the main fuel supply valve 15 is electrically controlled by the control device 8. When the main fuel supply valve 15 is opened, the main fuel accumulated in the common rail 13 can be supplied through the main fuel supply passage 14 to the fuel injection unit 7. As described above, the main fuel supply device 5 is electrically controlled by the control device 8 to supply the main fuel to the fuel injection unit 7 for injection.

The auxiliary fuel supply device 6 is a mechanically controlled device including an auxiliary fuel tank 16, an auxiliary fuel pump 17, an adjustment rack 18, an actuator 19, and an auxiliary fuel supply passage 20. The multi-fuel engine 2 includes the plurality of cylinders 31; however, in FIG. 1, the auxiliary fuel pump 17 and the auxiliary fuel supply passage 20 to one of the cylinders 31 is illustrated and the auxiliary fuel pumps 17 and the auxiliary fuel supply passages 20 to the others of the cylinders 31 are not illustrated.

The auxiliary fuel tank 16 is a tank in which the auxiliary fuel that is a hydrocarbon-based fuel such as light oil, kerosene, and heavy oil, is filled from the outside and stored, and the auxiliary fuel tank 16 is connected via an auxiliary fuel feed pump 16a to the auxiliary fuel pump 17. The auxiliary fuel pump 17 is disposed for each of the cylinders 31 of the multi-fuel engine 2 to supply the auxiliary fuel to the fuel injection unit 7, includes, for example, a cylindrical plunger barrel 21, a column-shaped plunger 22, and an auxiliary fuel valve 23, and is an auxiliary fuel accumulator that accumulates the pressurized auxiliary fuel.

The plunger barrel 21 is connected to the auxiliary fuel tank 16, and the auxiliary fuel is supplied from the auxiliary fuel tank 16 to an internal space of the plunger barrel 21 by the auxiliary fuel feed pump 16a. The plunger 22 is disposed in the internal space of the plunger barrel 21 and is slidable along the penetrating direction of the internal space of the plunger barrel 21.

In addition, the auxiliary fuel supply device 6 includes a cam 24 contactable with the plunger 22 on the other end side in the penetrating direction of the plunger barrel 21 of each auxiliary fuel pump 17, a camshaft 25 coaxially supporting the cam 24 of each auxiliary fuel pump 17, and a plunger spring 26 biasing the plunger 22 of each auxiliary fuel pump 17 to the cam 24 side.

When the cam 24 rotates together with the camshaft 25, the plunger 22 brought into contact with the cam 24 reciprocates with respect to the plunger barrel 21. When the plunger 22 moves to the other end side in the penetrating direction, the auxiliary fuel fed from the auxiliary fuel tank 16 by the auxiliary fuel feed pump 16a is introduced to the internal space of the plunger barrel 21, in the meanwhile, when the plunger 22 moves to one end side in the penetrating direction, the auxiliary fuel introduced to the internal space of the plunger barrel 21 is pressurized.

The auxiliary fuel valve 23 is disposed on one end side in the penetrating direction of the plunger barrel 21 and is connected to the auxiliary fuel supply passage 20. When the pressure of the auxiliary fuel accumulated in the internal space of the plunger barrel 21 reaches a predetermined pressure threshold or more, the auxiliary fuel valve 23 opens and the internal space of the plunger barrel 21 is brought into communication with the auxiliary fuel supply passage 20, and then the auxiliary fuel is supplied from the auxiliary fuel pump 17 to the auxiliary fuel supply passage 20. For example, the auxiliary fuel valve 23 includes a biasing member therein and is configured to open against biasing force of the biasing member when the pressure applied to the auxiliary fuel valve 23 reaches the predetermined pressure threshold or more.

The adjustment rack 18 is disposed in common to the plurality of cylinders 31 of the multi-fuel engine 2, and is configured to adjust the supply volume of the auxiliary fuel by each auxiliary fuel pump 17. For example, the auxiliary fuel supply device 6 includes a pinion 27 that rotates integrally with the plunger 22 of each auxiliary fuel pump 17, and the adjustment rack 18 is disposed so as to mesh with each pinion 27. A linear motion of the adjustment rack 18 allows the pinions 27 to rotate simultaneously, and thus the plungers 22 of the auxiliary fuel pumps 17 rotate simultaneously. The auxiliary fuel supply device 6 adopts known means utilizing rotation of the plunger 22 and thus can adjust the supply volume of the auxiliary fuel by using the rotation of the plunger 22, that is, can adjust the supply volume of the auxiliary fuel by using the motion of the adjustment rack 18.

The actuator 19 drives the adjustment rack 18 so as to move the adjustment rack 18 linearly, and may be configured, for example, by using a solenoid or a motor. The actuator 19 operates in response to an electric signal from the control device 8 to drive the adjustment rack 18.

As described above, the auxiliary fuel supply device 6 is operated in a mechanical control method to allow the auxiliary fuel pressurized by the auxiliary fuel pump 17 to be supplied through the auxiliary fuel supply passage 20 to the fuel injection unit 7 and injected therefrom. Although the actuator 19 operates in response to an electric signal from the control device 8, the actuator 19 mechanically adjusts the supply volume of the auxiliary fuel by using the motion of the adjustment rack 18 as in the conventional mechanically-controlled fuel supply device. **In** the present specification, a configuration in which the supply volume of the fuel is adjusted by the adjustment rack 18 is referred to as mechanical control (method).

The fuel injection unit 7 separately supplies the main fuel and the auxiliary fuel to the combustion chamber 31a, includes a main fuel injection unit 7a that injects the main fuel into the combustion chamber 31a and an auxiliary fuel injection unit 7b that injects the auxiliary fuel into the combustion chamber 31a, and is formed of, for example, an integral two-type fuel injector. **In** the fuel injection unit 7, the injection timing, injection volume, injection pressure, injection frequency, and the like of the main fuel, and the injection volume of the auxiliary fuel are controlled by the control device 8.

The fuel injection unit 7 injects the main fuel into the combustion chamber 31a when the piston 34 moves toward a bottom dead point. When the fuel-air mixture of the main fuel and air supplied into the combustion chamber 31a is compressed by the piston 34 moving toward a top dead point and the temperature and pressure thereof are increased, the fuel injection unit 7 injects the auxiliary fuel to the fuel-air mixture in the combustion chamber 31a, thereby igniting and burning the fuel-air mixture. In other words, the fuel injection unit 7 (the auxiliary fuel injection unit 7b) functions as an ignition device that ignites the fuel-air mixture in the combustion chamber 31a.

The two-type fuel injector forming the fuel injection unit 7 includes, for example, a first valve chamber and a second valve chamber for respectively supplying the main fuel and the auxiliary fuel to one valve main body, and is configured to be able to separately supply the main fuel and the auxiliary fuel by opening and closing valve elements disposed in the respective valve chambers. Alternatively, the two-type fuel injector includes a first passage and a second passage for respectively supplying the main fuel and the auxiliary fuel to one valve main body, and an injection hole communicating with each of the passages, and is configured to be able to separately supply the main fuel and the auxiliary fuel by switching the first passage and the second passage with respect to the injection hole.

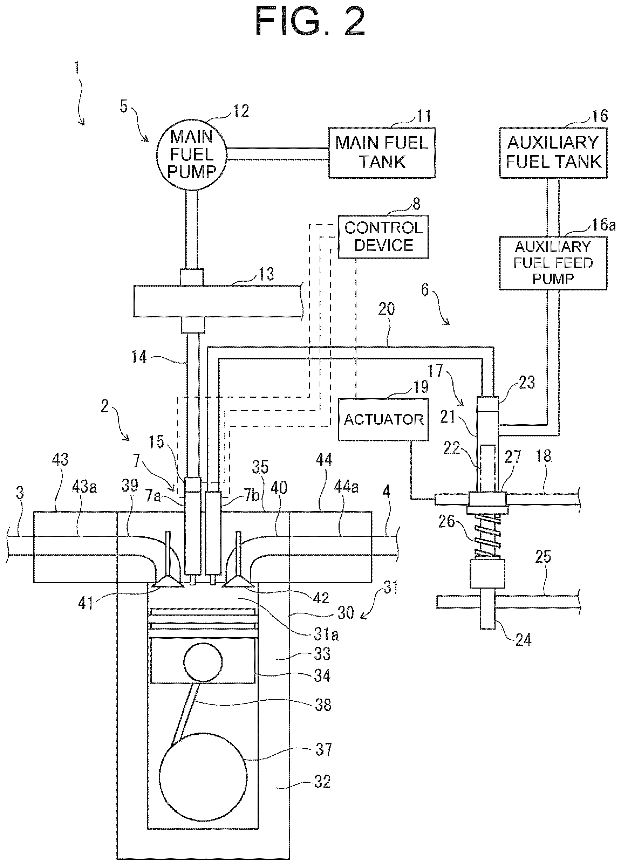

The multi-fuel engine 2 is, for example, a four-stroke engine, and includes the plurality of cylinders 31 and a crankcase 32 (see FIG. 2) in a cylinder block 30. In FIG. 1, one of the cylinders 31 is illustrated and the others of the cylinders 31 are not illustrated. Each of the cylinders 31 includes the cylinder 33, the piston 34, and a cylinder head 35 as illustrated in FIG. 1.

The cylinder 33 is formed, for example, in a cylindrical shape in the cylinder block 30, and the piston 34 is slidably housed in the cylinder 33. The cylinder head 35 is attached to the upper side of the cylinder 33. The combustion chamber 31a is formed on the inner side of the cylinder 33 and the cylinder head 35. The cylinder head 35 is provided with the fuel injection unit 7 that injects the main fuel and the auxiliary fuel into the combustion chamber 31a.

Each cylinder 33 of the plurality of cylinders 31 communicates with the crankcase 32, and a crankshaft 37 is rotatably supported by the crankcase 32. The piston 34 of each of the cylinders 31 is connected via a connecting rod 38 to the crankshaft 37, and reciprocating motion of the piston 34 is converted via the connecting rod 38 into rotary motion of the crankshaft 37.

The cylinder head 35 includes an intake port 39 and an exhaust port 40 that communicate with the combustion chamber 31a of the cylinder 33, and is provided with an intake valve 41 and an exhaust valve 42 that open and close the intake port 39 and the exhaust port 40, respectively, with respect to the combustion chamber 31a.

The intake port 39 is connected to an intake passage 3 to introduce air supplied from the intake passage 3 into the combustion chamber 31a. The exhaust port 40 is connected to an exhaust passage 4 to discharge exhaust gas generated in the combustion chamber 31a to the exhaust passage 4. When the intake valve 41 is opened, the fuel-air mixture of the main fuel and air can be taken into the combustion chamber 31a through the intake port 39. Meanwhile, when the exhaust valve 42 is opened, exhaust gas generated in the combustion chamber 31a can be discharged through the exhaust port 40.

The intake passage 3 is connected to the plurality of cylinders 31 of the multi-fuel engine 2 to supply the air compressed and cooled to each of the cylinders 31. The air-fuel mixture of the air supplied from the intake passage 3 and the main fuel supplied from the main fuel supply device 5 is supplied from the intake passage 3 into the combustion chamber 31a of each cylinder 31. For example, the intake passage 3 is connected via an intake manifold 43 to the multi-fuel engine 2. The intake manifold 43 includes a branch flow passage 43a branching into the plurality of cylinders 31, and each branch flow passage 43a is connected to each intake port 39.

The exhaust passage 4 is connected to the plurality of cylinders 31 of the multi-fuel engine 2, and allows exhaust gas generated in each of the cylinders 31 to flow therethrough and be discharged therefrom. For example, the exhaust passage 4 is connected via an exhaust manifold 44 to the multi-fuel engine 2. The exhaust manifold 44 includes a branch flow passage 44a branching into the plurality of cylinders 31, and each branch flow passage 44a is connected to each exhaust port 40. The exhaust passage 4 may be provided with a treatment device for treating the exhaust gas flowing through the exhaust passage 4, for example, a selective reduction catalyst or an ammonia adsorption catalyst, on the downstream side in the exhaust direction.

The control device 8 is a computer such as an engine control unit (ECU) that controls operation of the multi-fuel engine 2, includes a CPU, a ROM, a RAM, and the like, and is configured to control each part of the multi-fuel engine 2. The control device 8 may store various programs for controlling the multi-fuel engine 2 and control the multi-fuel engine 2 by reading and executing the programs.

In the present embodiment, in particular, the control device 8 electrically controls at least one of the injection volume, the injection pressure, the injection timing, and the injection frequency of the main fuel by the main fuel injection unit 7a of the fuel injection unit 7, and controls the rotational speed of the multi-fuel engine 2 at the time of idle operation or low load operation. In other words, when the control device 8 allows the multi-fuel engine 2 to operate at a relatively low speed in the idle operation or the low load operation, the control device 8 controls at least one of the injection volume, the injection pressure, the injection timing, and the injection frequency of the main fuel to correspond to the low rotation of the multi-fuel engine 2, and thus a small volume of the main fuel is injected. At this time, the control device 8 electrically controls each main fuel supply valve 15 corresponding to each cylinder 31, thereby controlling at least one of the injection volume, the injection pressure, the injection timing, and the injection frequency of the main fuel so that the main fuel injection unit 7a injects a small volume of the main fuel.

For example, the control device 8 controls the injection (injection volume, injection pressure, injection timing, injection frequency, and the like) of the main fuel by the main fuel injection unit 7a so that a calorific value of the main fuel reaches 50% or more with respect to the total calorific value of the main fuel and the auxiliary fuel when a small volume of the main fuel is injected at the time of idle operation or low-load operation of the multi-fuel engine 2. The control device 8 may control the calorific value of the main fuel to reach 50% or more with respect to the total calorific value of the main fuel and the auxiliary fuel within a predetermined period at the time of idle operation or low load operation.

For example, the control device 8 controls the injection (injection volume, injection pressure, injection timing, injection frequency, and the like) of the main fuel by the main fuel injection unit 7a so that the injection pressure of the main fuel by the main fuel injection unit 7a is higher than the injection pressure of the auxiliary fuel by the auxiliary fuel injection unit 7b when a small volume of the main fuel is injected at the time of idle operation or low load operation of the multi-fuel engine 2. At this time, the control device 8 may control the maximum value of the injection pressure of the main fuel to be higher than the maximum value of the injection pressure of the auxiliary fuel in one cycle of the multi-fuel engine 2.

Further, for example, the control device 8 controls the injection of the main fuel by the main fuel injection unit 7a so that the main fuel is injected multiple times into each cylinder 31 in one cycle of the multi-fuel engine 2 at the time of idle operation or low load operation of the multi-fuel engine 2. At this time, the control device 8 may control the main fuel to be injected multiple time in a compression stroke in each cylinder 31, and the main fuel may be injected when the piston 34 moves toward the top dead point, when the piston 34 reaches the top dead point, or immediately after the piston 34 reaches the top dead point.

Furthermore, the control device 8 may control the injection volume of the auxiliary fuel by the auxiliary fuel injection unit 7b. For example, the control device 8 transmits an electric signal to the actuator 19 of the auxiliary fuel supply device 6 to control the motion of the adjustment rack 18, thereby controlling the injection volume of the auxiliary fuel by the auxiliary fuel injection unit 7b.

As described above, according to the present invention, the engine device 1 that is operated by burning the main fuel including a low GHG fuel, which emits less greenhouse gas than a petroleum-based fuel, and the hydrocarbon-based auxiliary fuel includes the main fuel injection unit 7a of the fuel injection unit 7, which injects the main fuel by electric control, the auxiliary fuel injection unit 7b of the fuel injection unit 7, which injects the auxiliary fuel by mechanical control, and the control device 8 that electrically controls at least one of the injection volume, injection pressure, injection timing, and injection frequency of the main fuel by the main fuel injection unit 7a. The control device 8 controls the rotation speed of the multi-fuel engine 2 at the time of idle operation. For example, the main fuel includes ammonia or alcohol as the low GHG fuel.

Accordingly, according to the engine device 1 of the present invention, the common rail system is applied as injection means for the main fuel and the mechanically controlled device is applied as injection means for the auxiliary fuel, and thus an increase in costs can be suppressed. Further, by injecting the main fuel such as flame-retardant ammonia or alcohol with the use of the common rail system, micro-injection, atomization by high-pressure injection, and injection at an optimum injection timing can be performed. Therefore, stable idle operation and low load operation with the use of the main fuel can be performed, and the idle rotation speed can also be reduced. Furthermore, in the idle operation and the low load operation, the use of the main fuel such as ammonia or alcohol, which is a low GHG fuel is not limited, and a decrease in greenhouse gas emissions can be promoted.

In the engine device 1 of the present invention, the control device 8 controls the injection of the main fuel so that the calorific value of the main fuel reaches 50% or more with respect to the total calorific value of the main fuel and the auxiliary fuel at the time of idle operation of the multi-fuel engine 2.

Accordingly, the engine device 1 can use a large amount of the main fuel at the time of idle operation, and thus can suppress consumption of the hydrocarbon-based auxiliary fuel, increase consumption of the main fuel that is a low GHG fuel, and contribute to the preservation of the global environment.

In the engine device 1 of the present invention, the control device 8 controls the injection pressure of the main fuel to be higher than the injection pressure of the auxiliary fuel.

Accordingly, in the engine device 1, by using the common rail system, the flame-retardant main fuel can be injected at higher pressure than the auxiliary fuel, and thus further atomization and enhanced penetration can be attained. As a result, the flame retardancy of the main fuel can be improved.

In the engine device 1 of the present invention, the control device 8 controls the injection of the main fuel so that the main fuel is injected multiple times into each cylinder 31 in one cycle of the multi-fuel engine 2.

Accordingly, in the engine device 1, the main fuel is injected multiple times to be burned, and thus exhaust gas properties and fuel efficiency can be improved.

In the engine device 1 of the present invention, the control device 8 controls the injection volume of the auxiliary fuel. For example, the engine device 1 of the present invention includes the auxiliary fuel pump 17 that supplies the auxiliary fuel to the auxiliary fuel injection unit 7b, the adjustment rack 18 that adjusts the supply volume of the auxiliary fuel by the auxiliary fuel pump 17, and the actuator 19 that drives the adjustment rack 18. The actuator 19 is operated by an electric signal from the control device 8.

Accordingly, in the engine device 1, the injection volume of the auxiliary fuel is controlled by the control device 8 for the common rail system, and thus a control device for the mechanically controlled device can be omitted, and the injection control of multiple fuels can be avoided from being doubly controlled. In particular, in the mechanical controlled device that is the injection means for the auxiliary fuel, the injection volume of the auxiliary fuel is determined by the motion of the adjustment rack 18 with respect to the auxiliary fuel pump 17. Meanwhile, by controlling the actuator 19 that drives the adjustment rack 18 by the control device 8 for the common rail system, the injection volume of the auxiliary fuel can be controlled by the control device 8 for the common rail system.

In the embodiment described above, an example in which the fuel injection unit 7 is formed of the integral two-type fuel injector including the main fuel injection unit 7a that injects the main fuel and the auxiliary fuel injection unit 7b that injects the auxiliary fuel is described, but the present invention is not limited to this example. For example, in another embodiment, as illustrated in FIG. 2, the fuel injection unit 7 may be formed of separate injectors of the main fuel injection unit 7a that injects the main fuel and the auxiliary fuel injection unit 7b that injects the auxiliary fuel. In this case, the main fuel injection unit 7a that injects the main fuel may be arranged so as to directly supply the main fuel to the combustion chamber 31a by directly injecting the main fuel to the combustion chamber 31a, or may be arranged so as to indirectly supply the main fuel to the combustion chamber 31a by injecting the main fuel to the intake passage 3, the branch flow passage 43a, or the intake port 39.

Note that the present invention can be appropriately modified without departing from the gist or concept of the invention that can be read throughout the claims and the specification, and an engine device to which such modifications are made is also included in the technical concept of the present invention.

### [Supplementary Notes of the Invention]

Hereinafter, the overview of the invention extracted from the embodiment described above will be additionally described. Note that the configurations and processing functions described in the following supplementary notes can be selected and arbitrarily combined.

### Supplementary Note 1

An engine device that is operated by burning a main fuel including a low GHG fuel, which emits less greenhouse gas than a petroleum-based fuel, and a hydrocarbon-based auxiliary fuel, the engine device including:
a main fuel injection unit that injects the main fuel by electric control;
an auxiliary fuel injection unit that injects the auxiliary fuel by mechanical control; and
a control device that electrically controls at least one of injection volume, injection pressure, injection timing, and injection frequency of the main fuel by the main fuel injection unit;
wherein the control device controls a rotation speed of an engine at the time of idle operation.

### Supplementary Note 2

The engine device described in Supplementary Note 1, wherein the control device controls injection of the main fuel to bring a calorific value of the main fuel to 50% or more with respect to a total calorific value of the main fuel and the auxiliary fuel at the time of the idle operation of the engine.

### Supplementary Note 3

The engine device described in Supplementary Note 1 or 2, wherein the control device controls injection pressure of the main fuel to be higher than injection pressure of the auxiliary fuel.

### Supplementary Note 4

The engine device described in any one of Supplementary Notes 1 to 3, wherein the control device controls injection of the main fuel into each cylinder in one cycle of the engine to be performed multiple times.

### Supplementary Note 5

The engine device described in any one of Supplementary Notes 1 to 4, wherein the control device controls injection volume of the auxiliary fuel.

### Supplementary Note 6

The engine device described in Supplementary Note 5, including:
an auxiliary fuel pump that supplies the auxiliary fuel to the auxiliary fuel injection unit;
an adjustment rack that adjusts supply volume of the auxiliary fuel by the auxiliary fuel pump; and
an actuator that drives the adjustment rack,
wherein the actuator is operated by an electric signal from the control device.

### Supplementary Note 7

The engine device described in any one of Supplementary Notes 1 to 6, wherein the main fuel includes ammonia or alcohol as the low GHG fuel.

### REFERENCE SIGNS LIST

1 Engine device
2 Multi-fuel engine
3 Intake passage
4 Exhaust passage
5 Main fuel supply device
6 Auxiliary fuel supply device
7 Fuel injection unit
7a Main fuel injection unit
7b Auxiliary fuel injection unit
8 Control device
11 Main fuel tank
12 Main fuel pump
13 Common rail
14 Main fuel supply passage
15 Main fuel supply valve
16 Auxiliary fuel tank
17 Auxiliary fuel pump
18 Adjustment rack
19 Actuator
20 Auxiliary fuel supply passage
30 Cylinder block
31 Cylinder
31a Combustion chamber
32 Crankcase
33 Cylinder
34 Piston
35 Cylinder head
37 Crankshaft
38 Connecting rod
39 Intake port
40 Exhaust port
41 Intake valve
42 Exhaust valve
43 Intake manifold
43a Branch flow passage
44 Exhaust manifold
44a Branch flow passage

## Claims

1. An engine device that is operated by burning a main fuel including a low GHG fuel, which emits less greenhouse gas than a petroleum-based fuel, and a hydrocarbon-based auxiliary fuel, the engine device comprising:
a main fuel injection unit that injects the main fuel by electric control;
an auxiliary fuel injection unit that injects the auxiliary fuel by mechanical control; and
a control device that electrically controls at least one of injection volume, injection pressure, injection timing, and injection frequency of the main fuel by the main fuel injection unit,
wherein the control device controls a rotation speed of an engine at the time of idle operation.

2. The engine device according to claim 1, wherein the control device controls injection of the main fuel to bring a calorific value of the main fuel to 50% or more with respect to a total calorific value of the main fuel and the auxiliary fuel at the time of the idle operation of the engine.

3. The engine device according to claim 1, wherein the control device controls injection pressure of the main fuel to be higher than injection pressure of the auxiliary fuel.

4. The engine device according to claim 1, wherein the control device controls injection of the main fuel into each cylinder in one cycle of the engine to be performed multiple times.

5. The engine device according to claim 1, wherein the control device controls injection volume of the auxiliary fuel.

6. The engine device according to claim 5, comprising:
an auxiliary fuel pump that supplies the auxiliary fuel to the auxiliary fuel injection unit;
an adjustment rack that adjusts supply volume of the auxiliary fuel by the auxiliary fuel pump; and
an actuator that drives the adjustment rack,
wherein the actuator is operated by an electric signal from the control device.

7. The engine device according to claim 1, wherein the main fuel includes ammonia or alcohol as the low GHG fuel.
